# EUROPEAN PATENT APPLICATION

(11) **EP 4 428 609 A1**
(43) Date of publication of application: **11.09.2024**
(21) Application number: 23759107.8
(22) Date of filing: 18.02.2023
(51) Int. Cl.: G02F 1/21

(54) **MACH-ZEHNDER MODULATOR, ELECTRO-OPTICAL MODULATION METHOD AND LIGHT-EMITTING APPARATUS**

(30) Priority: 25.02.2022 CN 202210179586
(71) Applicant: Huawei Technologies Co., Ltd., Shenzhen, Guangdong 518129 (CN)
(72) Inventor: DONG, Zhen, Shenzhen, Guangdong 518129 (CN); ZHANG, Peijie, Shenzhen, Guangdong 518129 (CN); LI, Yanbo, Shenzhen, Guangdong 518129 (CN)
(74) Representative: Pfenning, Meinig & Partner mbB
(86) International application number: PCT/CN2023/077026
(87) International publication number: WO 2023/160482

(57) **Abstract**

A Mach-Zehnder MZ modulator (200), a multi-channel MZ modulator, and an optical transmitting apparatus (900) are provided. The MZ modulator (200) includes a splitter (201), two modulation arms, and a coupler (203). The two modulation arms include two optical transmission waveguides (202a, 202b) and two electrodes (204a, 204b). The splitter (201) is configured to: perform power splitting on an optical carrier to obtain two optical carriers, and input the two optical carriers to input ports of the two optical transmission waveguides (202a, 202b), respectively. The two electrodes (204a, 204b) include a first electrode (204a) and a second electrode (204b), which are respectively configured to: receive two electrical signals (S+, S-) that are differential signals, and apply the two electrical signals (S+, S-) to the two optical transmission waveguides (202a, 202b) to change phases of the two optical carriers. The first electrode (204a) is connected to two sides that are farther from each other of the two optical transmission waveguides (202a, 202b), and the second electrode (204b) is connected to two sides that are closer to each other of the two transmission waveguides (202a, 202b). Two input ends of the coupler (203) are connected to output ports of the two optical transmission waveguides (202a, 202b), respectively, and are configured to: perform interference on the optical carriers whose phases are changed via the two modulation arms, and output the optical carriers.

## Description

This application claims priority to Chinese Patent Application No. 202210179586.7, filed with the China National Intellectual Property Administration on February 25, 2022 and entitled "MACH-ZEHNDER MODULATOR, ELECTRO-OPTIC MODULATION METHOD, AND OPTICAL TRANSMITTING APPARATUS", which is incorporated herein by reference in its entirety.

### TECHNICAL FIELD

This application relates to the field of optical devices, and in particular, to a Mach-Zehnder modulator, an electro-optic modulation method, and an optical transmitting apparatus.

### BACKGROUND

An optical modulator is an important device in an optical communication system, and is configured to convert an electrical signal into an optical signal. AMach-Zehnder (Mach-Zehnder, MZ) modulator is a frequently used modulator structure.

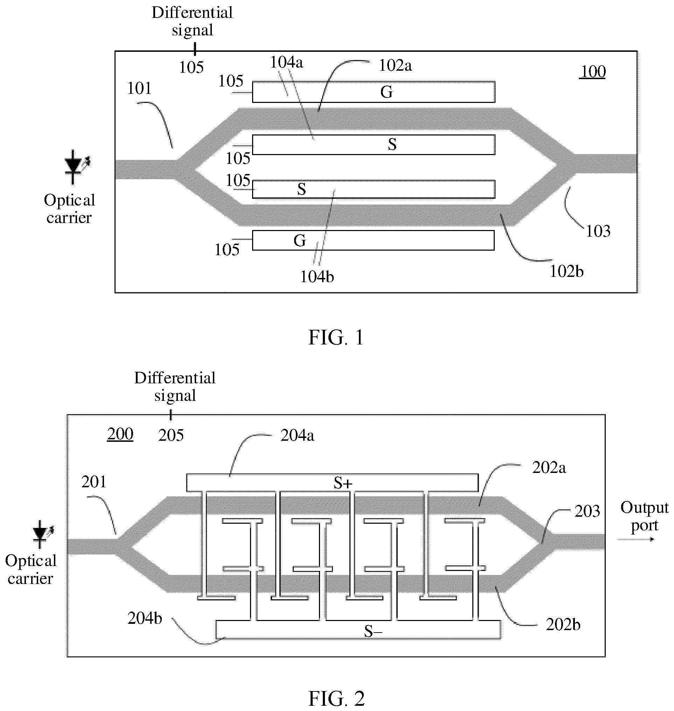

FIG. 1 is a diagram of a structure of an MZ modulator in the conventional technology. As shown in FIG. 1, the MZ modulator 100 includes a beam splitter 101, two modulation arms (102a and 104a, and 102b and 104b), and a coupler 103. An upper modulation arm includes an optical transmission waveguide 102a and electrodes 104a connected to two sides of the optical transmission waveguide 102a (the electrodes 104a include a ground electrode G and a signal electrode S that are located on an upper side and a lower side of the optical transmission waveguide 102a, respectively). A lower modulation arm includes an optical transmission waveguide 102b and electrodes 104b connected to two sides of the optical transmission waveguide 102b (the electrodes 104b include a signal electrode S and a ground electrode G that are located on an upper side and a lower side of the optical transmission waveguide 102b, respectively). The beam splitter 101 is configured to: perform power splitting on an input optical carrier to obtain two optical carriers, and respectively input the two optical carriers into the two modulation arms. The electrode 104a and the electrode 104b are configured to change, as driven by differential signals, phases of the two optical carriers that pass through the optical transmission waveguide 102a and the optical transmission waveguide 102b. In FIG. 1, through interfaces shown by 105, one electrical signal of the differential signals is applied to the upper modulation arm, and the other electrical signal of the differential signals is applied to the lower modulation arm. The two optical carriers whose phases are changed are input into two input ends of the coupler 103, and interference occurs, so that an output of the MZ modulator is obtained (that is, an optical signal modulated via the differential signal is output).

An important parameter for measuring performance of the MZ modulator is a modulation depth of the modulator. This parameter has a positive correlation with modulation efficiency of the modulation arm, a modulation voltage amplitude, and a length of the modulation arm. In other words, when other conditions are the same, higher modulation efficiency, a larger modulation voltage amplitude, and/or a longer modulation arm indicate/indicates a better modulation depth of the MZ modulator.

Because the modulation efficiency of the existing modulation arm is limited, the modulation depth needs to be increased by increasing the modulation voltage amplitude or increasing the length of the modulation arm. However, an increase in the modulation voltage amplitude causes an increase in power consumption of the MZ modulator, and an increase in the length of the modulation arm causes a large optical loss.

### SUMMARY

Embodiments of this application provide a new MZ modulator, an electro-optic modulation method, and an optical transmitting apparatus, to resolve a problem in the conventional technology that a modulation depth of a modulator needs to be increased at high costs.

According to a first aspect, an embodiment of this application discloses a Mach-Zehnder MZ modulator. The MZ modulator includes a splitter, two modulation arms, and a coupler. The two modulation arms include two optical transmission waveguides and two electrodes. The splitter includes one input port and two output ports, and is configured to perform power splitting on an optical carrier that is input from the input port of the splitter to obtain a first optical carrier and a second optical carrier, and input the first optical carrier and the second optical carrier to input ports of the two optical transmission waveguides respectively via the two output ports of the splitter. The two electrodes include a first electrode and a second electrode, which are configured to: receive a first input electrical signal and a second input electrical signal, respectively, and apply the two input electrical signals to the two optical transmission waveguides respectively to change phases of the first optical carrier and the second optical carrier. The first input electrical signal and the second input electrical signal are differential signals. The two optical transmission waveguides include a first optical transmission waveguide and a second optical transmission waveguide. Both a first side of the first optical transmission waveguide and a second side of the second optical transmission waveguide are connected to the first electrode. The first side of the first optical transmission waveguide and the second side of the second optical transmission waveguide are different sides (for example, the first side is a left side, and the second side is a right side). Both a second side of the first optical transmission waveguide and a first side of the second optical transmission waveguide are connected to the second electrode. The second side of the first optical transmission waveguide and the first side of the second optical transmission waveguide are different sides (for example, the second side is a right side, and the first side is a left side). The coupler includes two input ports and one output port, and is configured to receive, via the two input ports of the coupler, the optical carriers whose phases are changed by the two modulation arms, perform interference, and then output the optical carriers from the output port of the coupler.

It should be noted that the foregoing two optical transmission waveguides have two sides, for example, a left side and a right side, bounded by an optical carrier transmission direction. For example, the first optical transmission waveguide is on the right side of the second optical transmission waveguide, and the two electrodes are on the left side and the right side of the first optical transmission waveguide and the second optical transmission waveguide, respectively. In this case, the first electrode is connected to the left side of the first optical transmission waveguide and the right side of the second optical transmission waveguide (that is, two sides that are farther from each other), and the second electrode is connected to the right side of the second optical transmission waveguide and the left side of the first optical transmission waveguide. It should be understood that the left and the right are relative position descriptions, and such descriptions may alternatively be replaced with upper and lower descriptions.

Two electrodes are respectively connected to two sides that are closer to each other and two sides that are farther from each other of the two optical transmission waveguides. The MZ modulator increases an effective drive voltage and improves modulation performance of the MZ modulator without increasing a voltage amplitude of an input modulation electrical signal.

Optionally, the first optical transmission waveguide has a first PN junction, and the second optical transmission waveguide has a second PN junction. The first PN junction and the second PN junction are respectively configured to change, as driven by the first input electrical signal and the second electrical signal, the phases of the first optical carrier and the second optical carrier that pass through the two optical transmission waveguides. The first PN junction and the second PN junction have a same polarity distribution direction (for example, both P poles are above and both N poles are below). That both a first side of the first optical transmission waveguide and a second side of the second optical transmission waveguide are connected to the first electrode, and both a second side of the first optical transmission waveguide and a first side of the second optical transmission waveguide are connected to the second electrode includes: The first electrode is connected to a P end of the first PN junction and an N end of the second PN junction, and the second electrode is connected to an N end of the first PN junction and a P end of the second PN junction; or the first electrode is connected to an N end of the first PN junction and a P end of the second PN junction, and the second electrode is connected to a P end of the first PN junction and an N end of the second PN junction. This design is mainly applied to a semiconductor material such as silicon or indium phosphide, and extends an application material range of the modulator structure in the first aspect.

In a specific design, the two electrodes each include a T-shaped extension part and/or an L-shaped extension part. The T-shaped extension parts and/or the L-shaped extension parts of the two electrodes are respectively configured to be connected to the two sides that are closer to each other and the two sides that are farther from each other of the two optical transmission waveguides. This special shape design can reduce the electrode contact resistance, thereby improving bandwidth performance of the MZ modulator.

In a specific design, the MZ modulator further includes other two electrodes that are disposed on two sides of the two electrodes, respectively. The other two electrodes are configured to be grounded or connected to a direct current voltage. The two newly added electrodes can implement impedance matching with a signal source, reduce high-frequency signal reflection caused by impedance discontinuity, and improve bandwidth performance of the modulator.

In a specific design, the N end of the first PN junction is adjacent to the P end of the second PN junction to form a third PN junction. That the second electrode is connected to an N end of the first PN junction and a P end of the second PN junction includes: The second electrode is connected to the N end of the first PN junction via the third PN junction, and the second electrode is connected to the P end of the second PN junction. That the second electrode is connected to a P end of the first PN junction and an N end of the second PN junction includes: The second electrode is connected to the P end of the first PN junction via the third PN junction, and the second electrode is connected to the N end of the second PN junction. The third PN junction is equivalent to providing a capacitor having a large capacitance value, to implement a function of isolating a direct current.

In a specific design, for example, a P end of a PN junction is above. A first bias voltage is applied between the N end of the first PN junction and the first electrode, and a second bias voltage is applied between the second electrode and the first electrode. One of the first bias voltage and the second bias voltage is a positive bias voltage. The other of the first bias voltage and the second bias voltage is a negative bias voltage. A difference between an absolute value of a voltage value of the first bias voltage and an absolute value of a voltage value of the second bias voltage is less than a preset threshold. Further, negative bias voltages having basically equal values may be applied to both PN junctions, so that an electro-optic effect of the PN junction is improved, thereby improving modulation performance of the modulator.

In a specific design, parts that are of the two optical transmission waveguides and that are used for optical carrier transmission are S-shaped waveguides. It should be understood that a part that is of the optical transmission waveguide and that is used for optical carrier transmission may also be referred to as a ridge region.

In a specific design, the first optical transmission waveguide and the second optical transmission waveguide each include a plurality of transmission waveguides, and the plurality of transmission waveguides are connected in series by a curved waveguide.

The foregoing two design solutions can reduce a size of the MZ modulator.

In a specific design, the MZ modulator may further reduce impact of a high-speed signal on modulation bandwidth of the modulator in any one of the following manners. In one manner, one load resistor or two load resistors connected in series are disposed between the two electrodes. In another manner, two load resistors connected in series are disposed between the two electrodes, and an interface connected to a direct current voltage or grounded is disposed at a joint between the two load resistors connected in series, to reduce common-mode noise. In still another optional manner, a load resistor may be disposed between each of the two signal electrodes and a ground electrode corresponding to the signal electrode or an electrode connected to a direct current voltage.

According to a second aspect, an embodiment of this application provides a multi-channel MZ modulator. The multi-channel MZ modulator includes a plurality of MZ modulators mentioned in any one of the first aspect or the specific designs of the first aspect. An isolation electrode is disposed between two adjacent MZ modulators among the multiple MZ modulators, and the isolation electrode is configured to be grounded or connected to a direct current voltage.

According to a third aspect, an embodiment of this application provides an optical transmitting apparatus. The optical transmitting apparatus includes a laser and the MZ modulator mentioned in any one of the first aspect or the specific designs of the first aspect or the multi-channel MZ modulator mentioned in the second aspect. The laser is configured to transmit an optical carrier to the foregoing MZ modulator or the multi-channel MZ modulator.

In a specific design, the optical transmitter further includes a signal source. The signal source is configured to provide a first input electrical signal and a second input electrical signal that are differential signals for the MZ modulator or the multi-channel MZ modulator.

In a specific design, the optical transmitter further includes a bias voltage source. The bias voltage source is configured to provide a bias voltage for the MZ modulator or the multi-channel MZ modulator.

According to a fourth aspect, an embodiment of this application provides an electro-optic modulation method. The electro-optic modulation method includes a plurality of steps. First, an optical carrier is split to obtain a first optical carrier and a second optical carrier. Then, the first optical carrier and the second optical carrier are input to ports on same sides of a first optical transmission waveguide and a second optical transmission waveguide, respectively. Next, one of differential drive electrical signals is applied to a first side of the first optical transmission waveguide and a second side of the second optical transmission waveguide via a first electrode. The first side of the first optical transmission waveguide and the second side of the second optical transmission waveguide are two sides that are farther from each other. The other one of the differential drive electrical signals is applied to a second side of the first optical transmission waveguide and a first side of the first optical transmission waveguide via a second electrode. The second side of the first optical transmission waveguide and the first side of the first optical transmission waveguide are two sides that are closer to each other. In this way, phases of the first optical carrier and the second optical carrier are changed. Finally, interference is performed on the first optical carrier and the second optical carrier whose phases are changed via the first optical transmission waveguide and the second optical transmission waveguide, to output a modulated optical signal.

While lengths of the optical transmission waveguide and the electrode remain unchanged, the foregoing method may use a smaller drive voltage than a method in the conventional technology, thereby reducing device power consumption caused by modulation.

### BRIEF DESCRIPTION OF DRAWINGS

The following describes in more detail embodiments of this application with reference to the accompanying drawings.
FIG. 1 is a schematic diagram of a structure of an MZ modulator in the conventional technology;
FIG. 2 is a schematic diagram of a structure of a first MZ modulator according to an embodiment of this application;
FIG. 3a is a schematic diagram of a structure of a second MZ modulator according to an embodiment of this application;
FIG. 3b is a schematic diagram of a transformed structure of the MZ modulator shown in FIG. 3a;
FIG. 4 is a schematic diagram of a structure of a third MZ modulator according to an embodiment of this application;
FIG. 5 is a schematic diagram of an equivalent circuit of a partial structure shown in FIG. 4;
FIG. 6 is a schematic diagram of a structure of a fourth MZ modulator according to an embodiment of this application;
FIG. 7a is a sectional view of the structure shown in FIG. 6 on an A-A' surface;
FIG. 7b is a sectional view of the structure shown in FIG. 6 on a B-B' surface;
FIG. 8 is a schematic diagram of a structure of a fifth MZ modulator according to an embodiment of this application;
FIG. 9 is a schematic diagram of a structure of a sixth MZ modulator according to an embodiment of this application;
FIG. 10 is a schematic diagram of a structure of an optical transmitting apparatus according to an embodiment of this application; and
FIG. 11 is a schematic flowchart of an electro-optic modulation method according to an embodiment of this application.

### DESCRIPTION OF EMBODIMENTS

A device form and a service scenario that are described in embodiments of this application are intended to describe technical solutions in embodiments of the present invention more clearly, and do not constitute any limitation on the technical solutions provided in embodiments of the present invention. A person of ordinary skill in the art may learn that, as the device form evolves and a new service scenario appears, the technical solutions provided in embodiments of this application are also applicable to resolving a similar technical problem.

The technical solutions provided in this application are applicable to a scenario in which data communication is performed by using an optical signal, for example, a router network, a telecommunications Ethernet network, an optical access network, or a data center network. Specifically, the technical solutions provided in this application may be applied to a transmit side device corresponding to any one of the foregoing networks.

It should be noted that the terms "first", "second", and the like in this application are intended to distinguish between similar objects but do not necessarily indicate a specific order or sequence. It should be understood that the terms used in such a way is interchangeable in a proper circumstance so that embodiments described herein can be implemented in an order not described in this application. The term "and/or" is used to describe an association relationship between associated objects, indicating that there are three types of relationships. For example, A and/or B may represent the following three cases: Only A exists, both A and B exist, and only B exists.

It should be understood that a shape of a connection part between an electrode and an optical transmission waveguide, and a quantity of PN junctions included in the optical transmission waveguide in the accompanying drawings of this application are merely examples. In actual application, the setting may be performed according to a specific requirement. This is not limited in this application.

Unless otherwise specified, detailed descriptions of some technical features in an embodiment may also be used to explain corresponding technical features mentioned in another embodiment. For example, a material for an optical transmission waveguide is used as an example. For another example, a specific implementation for a coupler is used. In addition, to reflect a relationship between components in different embodiments more clearly, same or similar reference numerals are used in this application to represent components that have same or similar functions in different embodiments. It should be understood that two ion types in this application may be replaced with each other. Specifically, a region doped with a P-type ion may be replaced with a region doped with an N-type ion. Correspondingly, a region doped with the N-type ion may be replaced with a region doped with the P-type ion.

In an MZ modulator shown in FIG. 1, a peak-to-peak differential voltage (peak-to-peak differential Voltage, V_{ppd}) may be used to represent an amplitude of an effective drive voltage of the modulator. As shown in FIG. 1, it is assumed that an amplitude of an applied differential signal is Vₛ, Vₛ(+) is applied to an electrode 104a, and Vₛ(-) is applied to an electrode 104b. V_{ppd} applied to the MZ modulator is Vₛ-(-Vₛ), that is, 2Vₛ. To increase a modulation depth of the MZ modulator, a longer modulation arm needs to be provided or a drive voltage needs to be increased. However, this solution introduces a higher optical loss or increases a power loss of the MZ modulator.

Therefore, this application discloses a new MZ modulator. By using the new structure, an amplitude of an effective drive voltage can be increased to twice that of a solution in the conventional technology without changing a length of a modulation arm and increasing a drive voltage, to achieve an objective of increasing a modulation depth of an MZ modulator. Alternatively, to achieve a same modulation depth, a length of a modulation arm needed by the MZ modulator disclosed in this application may be half of that in the conventional technology, so that a size of the modulator is reduced, and an optical loss of a device is also reduced.

It should be noted that the modulation depth is generally used to describe performance of an MZ modulator used in a coherent optical transmission scenario. This parameter is replaced with an extinction ratio in a direct modulation and direct detection optical transmission scenario. In the following descriptions, this application is described by using the parameter of modulation depth as an example. It should be understood that beneficial effects of this application may alternatively be described as improving an extinction ratio of the MZ modulator.

FIG. 2 is a schematic diagram of a structure of a first MZ modulator according to an embodiment of this application. As shown in FIG. 2, the MZ modulator 200 includes a power splitter 201, two modulation arms, and a coupler 203. The two modulation arms include two optical transmission waveguides 202a and 202b, and two electrodes 204a and 204b. As shown in FIG. 2, the electrode 204a is connected to a positive signal (represented as S+ in FIG. 2) in a drive electrical signal (differential signal 205). The electrode 204b is connected to a negative signal (represented as S- in FIG. 2) in a drive electrical signal (differential signal 205). In addition, as shown in FIG. 2, the electrode 204a is separately connected to an upper side of the optical transmission waveguide 202a and a lower side of the optical transmission waveguide 202b (that is, different sides of the two optical transmission waveguides). The electrode 204b is separately connected to a lower side of the optical transmission waveguide 202a and an upper side of the optical transmission waveguide 202b (that is, the other different sides of the two optical transmission waveguides). In other words, the electrode 202a is connected to two sides (that is, the different sides that are of the two optical transmission waveguides and that are farther from each other) that are of the two optical transmission waveguides and that face away from each other. The electrode 202b is connected to two sides (that is, the other different sides that are of the two optical transmission waveguides and that are closer to each other) that are of the two optical transmission waveguides and that are near each other. In this application, the power splitter is referred to as a splitter for short in the following, and is configured to divide power of an input light beam to obtain two light beams, and output the two light beams through two different ports.

A process in which the MZ modulator 200 applies an electrical signal to an optical carrier to output an optical signal is described below. First, the optical carrier is input from an input port of the splitter 201, and after power splitting of the splitter 201, the optical carrier is split into two optical carriers. The two optical carriers are input to the two optical transmission waveguides 202a and 202b respectively for transmission. Specifically, the transmission of the two optical carriers is separately performed through input ports (for example, input ports on left sides of the two optical transmission waveguides shown in FIG. 2) that are on same sides and that are of the two optical transmission waveguides 202a and 202b. Phases of the optical carriers whose transmission is performed in the two optical transmission waveguides change as the differential signal (that is, the input electrical signal) is driven by the electrodes 204a and 204b. After the two optical carriers whose phases are changed are output from the two optical transmission waveguides, respectively, the two optical carriers enter two input ports of the coupler 203 for interference (that is, codirectional constructive interference and contradirectional destructive interference occur), and then are output through an output port of the coupler 203. Specifically, the two optical carriers whose phases are changed are output from the output ports (for example, output ports on right sides of the two optical transmission waveguides shown in FIG. 2) that are on same sides and that are of the two optical transmission waveguides. It should be understood that the MZ modulator implements amplitude modulation on the optical carrier under an effect of an input electrical signal. In other words, the MZ modulator represents different electrical signals by using outputs with light or without light, that is, completes an amplitude modulation process of an optical carrier.

In this embodiment, a material of the power splitter, the coupler, and/or the optical transmission waveguide may be lithium niobate (LiNbO3) or another semiconductor material that can directly apply voltage drive via an electrode. For example, the material is LiNbO3. When a voltage is applied by the LiNbO3, a Pockels effect (which is an electro-optic effect) is generated, so that a refractive index of the LiNbO3 changes with the voltage, thereby changing a phase of an optical carrier that passes through an optical transmission waveguide. The coupler 103 may be a multimode interferometer (Multimode Interferometer, MMI) coupler or a directional coupler.

It should be understood that a connection relationship between the differential signal and the electrode is merely an example. In another implementation, the electrode 204a and the electrode 204b may be connected to the negative signal and the positive signal of the differential signal, respectively. This is not limited in this embodiment of this application.

Optionally, one electrode may be separately disposed on an upper side of the electrode 204a and a lower side of the electrode 204b. If the two electrodes 204a and 204b are considered as a whole, two electrodes may be disposed on two sides of the electrodes 204a and 204b. The two newly added electrodes may be grounded or connected to a direct current voltage, to form an electric field and affect impedance, thereby implementing impedance matching with a signal source, reducing high-frequency signal reflection caused by impedance discontinuity, and ensuring bandwidth performance of the MZ modulator (that is, supporting a larger electro-optic response bandwidth).

The electrode 204a and the electrode 204b each include an extension part, configured to be connected to a distant optical transmission waveguide. For example, as shown in FIG. 2, the electrode 204a includes a plurality of extension parts, and the extension parts are connected to one side (lower side) of the optical transmission waveguide 202b. The electrode 204b includes a plurality of extension parts, to respectively implement connection to the sides (that is, the lower side of 202a and the upper side of 202b) that are of the two optical transmission waveguides and that are closer to each other. In some possible implementations, the foregoing extension part may be T-shaped (or may be referred to as inverted T-shaped), L-shaped (or mirrored L-shaped), or the like. The extension part may include one or more T-shaped or L-shaped extension parts, to implement connection to sides of two different optical transmission waveguides. As shown in FIG. 2, the electrode 204b may be understood as including a plurality of double-T-shaped extension parts, which are alternatively referred to as a plurality of F-shaped extension parts. An advantage of a shape design such as a T shape and/or an L shape is that electrode contact resistance is reduced. In addition, using the T shape and/or the L shape to design the extension part may optimize modulator impedance and a light wave group refractive index, thereby achieving better bandwidth performance of the modulator. This is not limited in this application. It should be understood that the extension part may also be designed in another shape. For example, the extension part of the electrode may be designed as a plurality of parallel line shapes. This is not limited in this embodiment of this application.

In the MZ modulator shown in this embodiment, the two electrodes are connected to the two sides that are closer to each other and the two sides that are farther from each other of the two optical transmission waveguides, respectively, so that a voltage applied to a single optical transmission waveguide is 2Vₛ, and voltage symbols applied to the two optical transmission waveguides are opposite. In this case, V_{ppd} of the modulator is 2Vₛ-(-2Vₛ), that is, 4Vₛ, which is twice an effective drive voltage in the conventional technology. In addition, a structure of the modulator in this embodiment is simple, and a size of the modulator basically does not need to be increased.

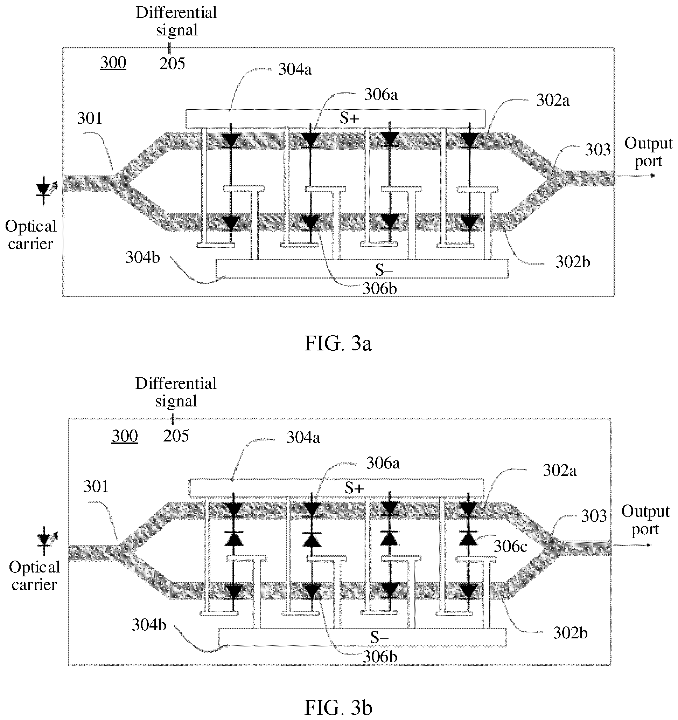

FIG. 3a is a schematic diagram of a structure of a second MZ modulator according to an embodiment of this application. As shown in FIG. 3a, the MZ modulator 300 includes a splitter 301, two modulation arms, and a coupler 303. The two modulation arms include two optical transmission waveguides (302a and 302b) and two electrodes (304a and 304b). Different from FIG. 2, materials of the optical transmission waveguides 302a and 302b are semiconductor materials such as silicon (Si), indium phosphide (InP), or gallium arsenide (GaAs). Optionally, the splitter 301 and the coupler 303 may use a same material as the optical transmission waveguides. Alternatively, the splitter 301 and the coupler 303 may use a same material different from that of the optical transmission waveguides. For example, the splitter 301 and the coupler 303 use silicon nitride, and the optical transmission waveguides use silicon. This is not limited in this embodiment of this application. In addition, to implement modulation of an electrical signal on optical carriers whose transmission is performed in the two optical transmission waveguides, P-type ions are doped on one side of the two optical transmission waveguides along a transmission direction, and N-type ions are doped on the other side of the two optical transmission waveguides, to form a PN junction (that is, 306a and 306b shown in FIG. 3a). The two electrodes are connected to different poles of the PN junction of the optical transmission waveguide to change a phase of an optical carrier in the optical transmission waveguide. As shown in FIG. 3a, distribution of P ends and N ends of PN junctions formed on the optical transmission waveguides 302a and 302b is consistent (which is referred to as that the PN junctions have a same polarity distribution direction for short, or may be referred to as that the PN junctions have a same direction). As shown in FIG. 3a, for each PN junction formed on the two waveguides, the P end is at the upper position and the N end is at the lower position.

A connection manner of the two electrodes and the two optical transmission waveguides may be specifically described as follows: The electrode 304a is connected to the P end of the PN junction 306a, and the electrode 304a is connected to the N end of the PN junction 306b via an extension part of the electrode 304a. The electrode 304b is connected to the N end of the PN junction 306a and the P end of the PN junction 306b via an extension part of the electrode 304b. As shown in FIG. 3a, the electrode 304b is connected to adjacent side faces of the two optical transmission waveguides via a T-shaped extension part. This design is used in a scenario in which the two optical transmission waveguides are close. If the two optical transmission waveguides are farther from each other, the electrode 304b may also be designed by using the extension part shown in FIG. 2 or another transformed design. This is not limited in this embodiment.

A working process of the MZ modulator shown in FIG. 3a is basically the same as that shown in FIG. 2. Details are not described herein again. In addition, beneficial effects of the MZ modulator shown in FIG. 3a are the same as those in FIG. 2. Details are not described herein again.

In a specific implementation, the N end of the PN junction 306a may be adjacent to the P end of the PN junction 306b, to form another PN junction. It should be understood that if there are a plurality of PN junctions 306a and a plurality of PN junctions 306b, a plurality of new PN junctions are formed. FIG. 3b is a schematic diagram of a transformed structure of the MZ modulator shown in FIG. 3a. In other words, in the structure shown in FIG. 3a, a plurality of PN junctions 306c are formed between the original two groups of PN junctions (that is, 306a and 306b). The PN junction 306c is equivalent to providing a capacitor having a large capacitance value, so that a direct current can be isolated, to facilitate loading bias voltages to the PN junctions of the two modulation arms. It should be understood that, in a structure in which the PN junctions 306c exist shown in FIG. 3b, the electrode S- (304b) is connected to the N end of the PN junction 306a via the PN junction 306c instead of being directly connected.

A voltage (which is from a differential signal) is applied to a PN junction, to enable a carrier dispersion effect to occur in the PN junction. Because opposite voltages are applied to the PN junctions of the upper and lower modulation arms, the optical transmission waveguides of the upper and lower arms generate a refractive index difference, so that a phase difference is generated between optical carriers that pass through the upper and lower optical transmission waveguides. If the phase difference of the optical carriers output by the two different modulation arms is 0, the optical carriers are superposed and output (that is, constructive interference). If the phase difference of the optical carriers output by the two different modulation arms is 180, no optical carrier is output (that is, destructive interference). Therefore, the modulator implements a function of performing phase modulation on an input optical carrier by using an input differential electrical signal.

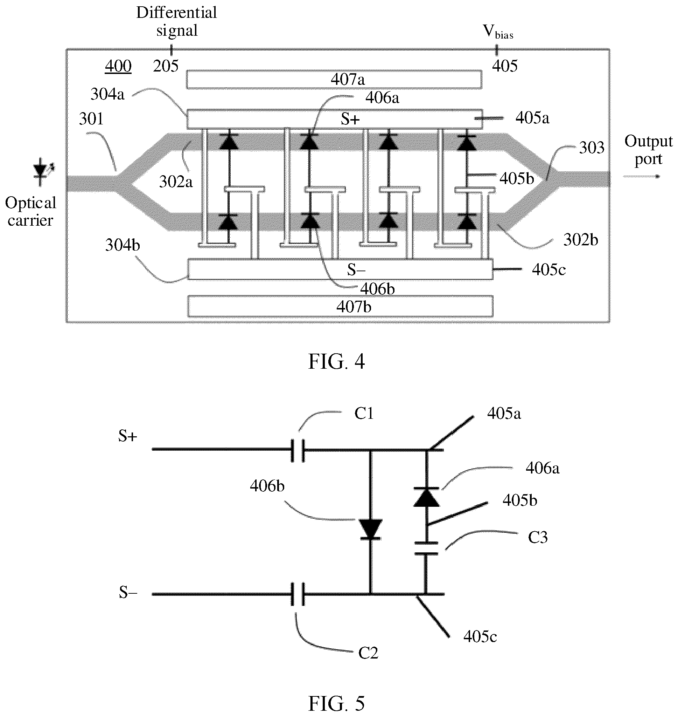

FIG. 4 is a schematic diagram of a structure of a third MZ modulator according to an embodiment of this application. As shown in FIG. 4, the MZ modulator 400 includes a splitter 301, two modulation arms, a coupler 303, and two electrodes (407a and 407b). The two modulation arms include two optical transmission waveguides (302a and 302b), corresponding PN junctions 406a and 406b, and two electrodes (304a and 304b). A connection relationship of the MZ modulator shown in FIG. 4 is basically the same as that in the example shown in FIG. 3a. The main differences lie in three points. First, polarity distribution directions of the PN junctions of the two optical transmission waveguides shown in FIG. 4 are the same, but are opposite to the example in FIG. 3a. In other words, in the example in FIG. 4, P ends of the two PN junctions are both below, and N ends of the two PN junctions are both above. In addition, the MZ modulator shown in FIG. 4 further includes two electrodes (that is, electrodes 407a and 407b) configured to match an input drive electrical signal, which are disposed on an upper side of the electrode 304a and a lower side of the electrode 304b, respectively. The electrodes 407a and 407b are grounded or connected to a direct current voltage to implement impedance matching with the input drive electrical signal (that is, a differential signal 205). Finally, in addition to being configured to be connected to the differential signal 205, the electrode S+ (that is, the electrode 304a) and the electrode S- (that is, the electrode 304b) are further respectively configured to be connected to a bias voltage 405 (that is, V_{bias}), so that the PN junction is in a reverse bias state. A larger reverse bias voltage of the PN junction indicates a smaller junction capacitance of the PN junction, and smaller signal attenuation of the electrode of the modulator. Therefore, increasing the reverse bias voltage of the PN junction can increase electro-optic response bandwidth of the modulator. Specifically, a negative bias voltage is connected between a joint (for example, the part 405b) of the PN junction 406a and the PN junction 406b between the electrode S+ (for example, the part 405a). A positive bias voltage is connected between the electrode S- (that is, the part 405c) and the electrode S+ (that is, the part 405a). Absolute values of the two bias voltages are basically the same. In other words, the absolute values of the two bias voltages are the same or have a small value deviation (for example, a difference between the absolute values of the two bias voltages is less than or equal to a preset deviation threshold). It should be noted that a shape of an extension part of the electrode 304b is merely an example. The shape of the extension part of the electrode 304b may alternatively be replaced with the shape of the electrode 204b as shown in FIG. 2 or transformation thereof.

Optionally, as shown in FIG. 4, a P end of the PN junction 406a is connected to an N end of the PN junction 406b, to form another PN junction (not shown in the figure). Specifically, a PN junction having a P end above and an N end below is formed between the P end of the PN junction 406a and the N end of the PN junction 406b. Relative positions of the another PN junction and the other two PN junctions and electrodes are the same as those of the PN junction 306c in FIG. 3b, and are not shown in the accompanying drawings herein.

FIG. 5 is a schematic diagram of an equivalent circuit of a partial structure shown in FIG. 4. The another PN junction (not shown in FIG. 5, and for details, refer to the PN junction 306c in FIG. 3b) is equivalent to a capacitor C3 having a large capacitance value, and can implement a function of isolating a direct current, to isolate bias voltages of the two PN junctions. In FIG. 4, a capacitor C1 and a capacitor C2 are respectively disposed between differential signals (a signal S+ and a signal S-) and the two electrodes (an electrode S+ and an electrode S-), to prevent a direct current bias voltage from being loaded to a signal source or a driver that inputs the differential signals to the MZ modulator, thereby reducing impact of the direct current bias voltage on quality of a drive electrical signal. As shown in FIG. 5, a negative bias voltage may be applied to the PN junction 406a (that is, the negative bias voltage is applied between 405b and 405a), and a negative bias voltage may also be applied to the PN junction 406b (that is, a positive bias voltage is applied to 405c and 405a), so that the PN junction is in a reverse bias state, to improve performance of the modulator. For example, 405a may be grounded, -V_{bias} may be applied to 405b, and +V_{bias} may be applied to 405c, so that a negative bias voltage can be applied to both PN junctions. For another example, -V_{bias} may be connected to 405a, 405b is grounded, and -2V_{bias} is applied to 405c, so that a negative bias voltage can also be applied to both PN junctions. The bias voltages on 405a, 405b, and 405c may be loaded by an inductor, a magnetic bead, and/or another component that allows a direct current to pass through and stops an alternating current, to reduce impact on quality of a high-frequency electrical signal.

In the MZ modulator shown in this embodiment, two electrodes are connected to different sides of two optical transmission waveguides, respectively, so that a voltage applied to a single optical transmission waveguide is 2Vₛ, and V_{ppd} of the entire modulator is 2Vₛ-(-2Vₛ), that is, 4Vₛ, which is twice an effective drive voltage in the conventional technology. The modulator in this embodiment has a simple structure, and a modulation depth of the modulator is effectively increased without increasing a size of the modulator.

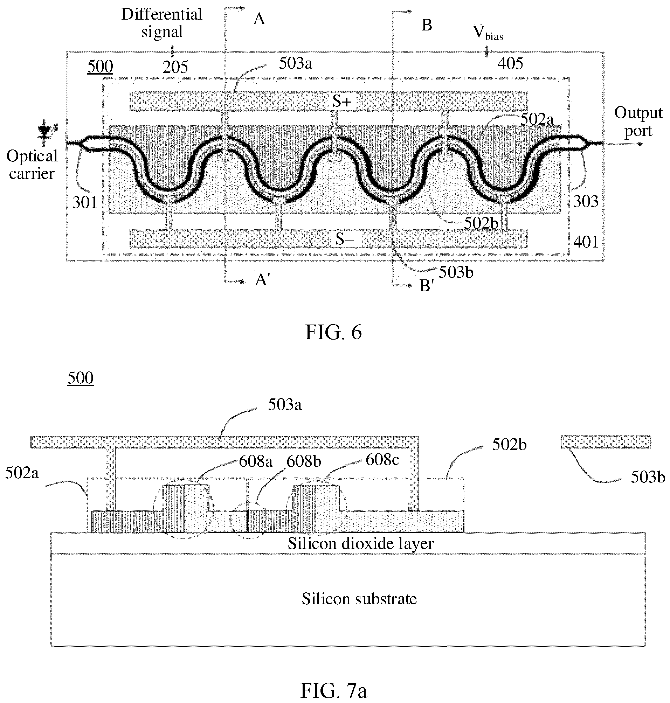

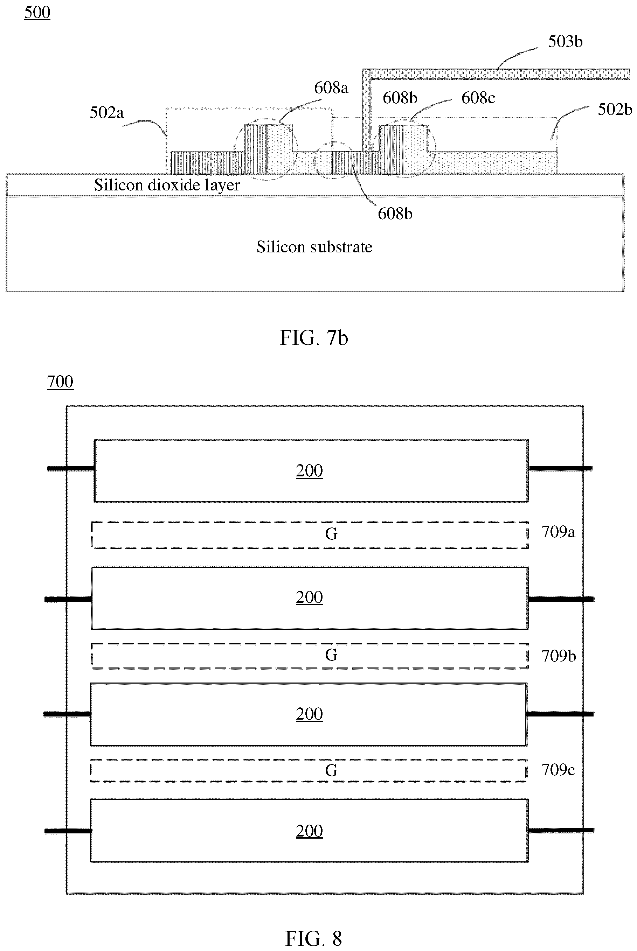

It should be noted that the accompanying drawings provided in FIG. 2 to FIG. 4 are top views of the MZ modulator structure. A substrate (for example, a silicon substrate (Silicon Substrate) shown in FIG. 7a) and a buried oxide (Buried Oxide, BOX) layer used for optical isolation (for example, a silicon dioxide layer shown in FIG. 7a) included in the MZ modulator are not shown. In addition, FIG. 2 to FIG. 4 do not provide a sectional view to show a specific schematic diagram of a connection relationship between an electrode and an optical transmission waveguide. Refer to the following FIG. 7a, FIG. 7b, and related descriptions. Details are not described herein again.

It should be noted that quantities of PN junctions shown in FIG. 3a, FIG. 3b, and FIG. 4 are merely examples. In a specific application, the optical transmission waveguide may be doped on two sides of the optical transmission waveguide to form a continuous PN junction that is perpendicular to an optical carrier transmission direction in the optical transmission waveguide. Correspondingly, in the foregoing three embodiments, a quantity of extension parts of the electrode is merely an example. A quantity of extension parts used in an actual design is not limited in embodiments of this application.

FIG. 6 is a schematic diagram of a structure of a fourth MZ modulator according to an embodiment of this application. As shown in FIG. 6, the MZ modulator 500 includes a splitter 301, two modulation arms, and a coupler 303. The two modulation arms include two curved optical transmission waveguides (502a and 502b) and two electrodes (503a and 503b). For functions of components shown in FIG. 6, refer to the descriptions of the components corresponding to the foregoing embodiment. Details are not described herein again. As shown in FIG. 6, parts (which are two black curved solid line parts in FIG. 6) that are in the two optical transmission waveguides and that are used for optical carrier transmission are in an S shape. The S shape may also be described as a mirror S shape or a shape of a plurality of S-shaped waveguides connected end to end. It should be understood that FIG. 6 is merely an example. A part that is of the optical transmission waveguide and that is used for optical carrier transmission may also be a curved waveguide of another shape, for example, a shape having a degree of curvature greater or smaller than that shown in FIG. 6, or a waveguide that is a mixture of a straight waveguide and a curved waveguide. This is not limited in this embodiment of this application.

To better display a relationship between an electrode and a transmission waveguide, the following provides descriptions with reference to a sectional view of FIG. 6.

FIG. 7a is a sectional view of the structure shown in FIG. 6 on an A-A' surface. FIG. 7b is a sectional view of the structure shown in FIG. 6 on a B-B' surface. It should be understood that a perspective of this sectional view presents a relative position relationship of the components of the MZ modulator 500 from a direction indicated by a direction A.

Specifically, as shown in FIG. 7a and FIG. 7b, the MZ modulator 500 includes a silicon substrate, a silicon dioxide layer disposed on the silicon substrate, an optical transmission waveguide layer (none of which are provided with reference numerals) disposed on the silicon dioxide layer, and electrodes. 502a and 502b are two optical transmission waveguides, respectively. Three PN junctions, that is, 608a to 608c, are formed by ion doping. As shown in FIG. 7a, the electrode 503a is separately connected to a P end of the PN junction 608a and an N end of the PN junction 608c. It should be understood that on the A-A' surface of the MZ modulator, the electrode 503b is not directly connected to the two optical transmission waveguides. As shown in FIG. 7b, the electrode 503b is directly connected to a P end of the PN junction 608c. In addition, via the PN junction 608b, the electrode 503b is further connected to an N end of the PN junction 608a. It should be understood that in another implementation, for example, when there is no PN junction 608b, the electrode 503b may be similar to the electrode 503a shown in FIG. 7a, and is separately connected to the N end of the electrode 608a and the P end of the PN junction 608c via two extension parts.

It should be noted that, in FIG. 7a and FIG. 7b, an insulation medium layer (for example, silicon dioxide) (not shown in the figures) is filled in the electrodes and the optical transmission waveguides and/or the silicon dioxide layer. In addition, to simplify the descriptions of the accompanying drawings, a black curved line part of the optical transmission waveguide shown in FIG. 6 is not correspondingly marked.

It should be understood that, in FIG. 7a and FIG. 7b, the two optical transmission waveguides (that is, 502a and 502b) each include a plurality of parts. For example, in this embodiment, using the optical transmission waveguide 502a as an example, the optical transmission waveguide 502a includes a part (which may be referred to as a ridge region) used for optical carrier transmission, a PN junction (which overlaps with the ridge region), and a part used for connecting to an electrode (that is, a part that is adjacent to a silicon dioxide layer but is not used for optical carrier transmission in FIG. 7a, also referred to as a flat plate region (flab)). Alternatively, the ridge region may be referred to as an optical transmission waveguide, and the optical transmission waveguide and the flat plate region constitute an entirety and are referred to as an optical transmission waveguide layer. This is not limited in this embodiment of this application.

According to the MZ modulator provided in this embodiment of this application, the two electrodes are connected to the S-shaped optical transmission waveguides, to implement effective voltage drive of four times of an input electrical signal, thereby effectively increasing a modulation depth of the MZ modulator. In addition, using the S-shaped optical transmission waveguides enables the MZ modulator solution provided in this embodiment to reduce a size of the modulator.

It should be noted that the connection in all embodiments of this application may be a direct physical connection (as shown in FIG. 7a), or may be an indirect connection. The indirect connection includes, for example, an electrical connection or another type of indirect connection. For example, if the ridge region in FIG. 7a is referred to as an optical transmission waveguide, the electrode 503a is connected to the optical transmission waveguide via the flat plate region, so that a drive voltage can be applied to the optical transmission waveguide, that is, the foregoing electrical connection. For another example, if the optical transmission waveguide of the MZ modulator shown in FIG. 2 uses a LiNbO3 material, the two electrodes are disposed on two sides of the optical transmission waveguide, so that the optical transmission waveguide is in an electric field applied by the electrodes, so that the electric field can change a refractive index of the optical transmission waveguide. This should be understood as an example of another type of indirect connection.

FIG. 8 is a schematic diagram of a structure of a fifth MZ modulator according to an embodiment of this application. As shown in FIG. 8, the MZ modulator 700 is a four-channel MZ modulator, including four MZ modulators 200 shown in FIG. 2, and ground electrodes (that is, electrodes 709a to 709c) each are disposed between two adjacent modulators. The three ground electrodes are configured to isolate modulators of different channels, to reduce signal crosstalk between the modulators of the different channels.

It should be understood that the three ground electrodes may alternatively be replaced with electrodes connected to a direct current voltage, to achieve a same objective.

It should be noted that the modulator 200 shown in FIG. 8 may alternatively be replaced with the modulator shown in the foregoing another embodiment. In addition, a quantity of channels in this embodiment is merely an example. In actual use, the quantity of channels may be set according to a requirement. This is not limited in this application. In addition, wavelengths of optical carriers used between different channels may be the same or may be different. In a specific implementation, for example, in an optical transceiver module that complies with the 100GE PSM4 MSA standard or the 400GE-DR4 standard, wavelengths of a plurality of channels are all 1310 nm wavelengths. In another specific implementation, in an optical transceiver module that complies with 100GE CWDM4 MSA or 400GE-FR4 MSA, wavelengths of four channels respectively are 1271 nm, 1291 nm, 1311 nm, and 1331 nm, which match the CWDM wavelength grid specified in ITU-T G.604.2.

Beneficial effects of the multi-channel MZ modulator provided in this embodiment are the same as those shown in FIG. 2. Details are not described herein again. In addition, the MZ modulator solution in which different channels are isolated via electrodes improves performance of the multi-channel MZ modulator.

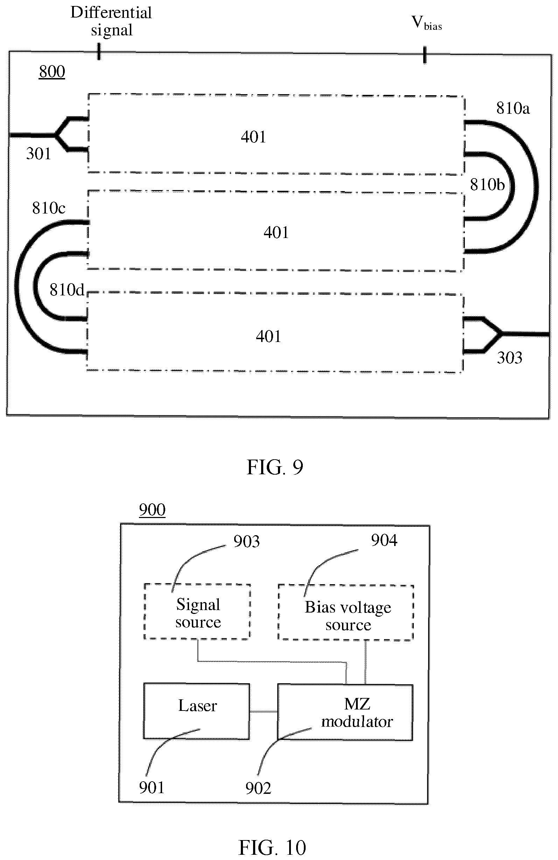

FIG. 9 is a schematic diagram of a structure of a sixth MZ modulator according to an embodiment of this application. As shown in FIG. 9, the MZ modulator 800 includes a splitter 301, a coupler 303, a plurality of parts 401, and a plurality of curved waveguides (810a to 810d) for connecting the parts 401. The parts 401 are dash-dotted-line box parts (that is, two modulation arm parts) shown in FIG. 6. It should be understood that the 401 parts may alternatively replace the two modulation arm parts in the foregoing another embodiment or transformation thereof (for example, an electrode for isolating a direct current is further disposed between the two electrodes). It should be understood that when a material used by the MZ modulator shown in FIG. 9 is silicon, the plurality of curved waveguides 810a to 810d may have a PN junction, or may not have a PN junction. In the foregoing implementation, it may be understood that the plurality of curved waveguides 810a to 810d are part of the optical transmission waveguides that are correspondingly connected in the plurality of parts 401.

It should be understood that the MZ modulator in this embodiment may be understood as that the two modulation arms each have a plurality of segments of structure, and each segment of structure is connected by a curved waveguide, to reduce a size of a device and increase a length of the modulation arm, thereby further improving a modulation depth of the modulator.

Beneficial effects of the MZ modulator provided in this embodiment are the same as those shown in FIG. 6. Details are not described herein again. In addition, in the MZ modulator solution in which a plurality of modulators are connected by a curved waveguide, the modulation depth of the MZ modulator is effectively increased, and a size of the modulator can also be reduced.

It should be understood that the coupler in the foregoing embodiment may be a device such as a three-port device or a four-port device. This is not limited in this application, and only the coupler needs to have at least three ports.

It should be noted that the electrode in the foregoing embodiment may be of a travelling wave electrode (Travelling wave electrode, TWE) structure, or may be of a lump electrode (Lump electrode, LE) structure. When the electrode is long, the electrode is considered as a transmission line, and transmission of a differential signal is performed at a specific speed on the electrode. In this case, the electrode is of the TWE structure. When the electrode is short (which is less than a wavelength of a differential signal), the electrode can be regarded as a lump electrode. The electrode is equivalent to a point and is not of a transmission line structure. For example, the electrode shown in FIG. 6 is a lump electrode, which can reduce an overall size of the modulator. For another example, the electrode shown in FIG. 3a is a travelling wave electrode, which can improve modulation efficiency of the modulator.

It should be further noted that, to further reduce impact of a high-speed signal on modulation bandwidth, a load resistor may be added between two electrodes. For example, one or two load resistors may be connected between an electrode S+ and an electrode S-. Optionally, an interface may be further added between the two load resistors to be connected to a direct current voltage or to be grounded, to reduce common-mode noise. For another example, a load resistor is provided between each of an electrode S+ and an electrode S- and a ground electrode at outer side of the electrode. Alternatively, another manner that is of disposing a load resistor and that is used in the industry or is to be used in the future may be used to improve modulation bandwidth performance of the MZ modulator. This is not limited in this embodiment of this application.

It should be understood that the accompanying drawings for the MZ modulator in this application mainly show a relative position relationship between components. During specific implementation, a size of the MZ modulator, a relative distance between components of the MZ modulator, and a size of a specific component are not limited in this embodiment of this application. For example, in a current design, usually an MZ modulator has a width of about 100 micrometers to 500 micrometers and a length of 0.5 millimeters to 2 millimeters. For another example, the ridge region of the 608a structure shown in FIG. 7a usually has a width of 0.3 micrometers to 2 micrometers. With progress of an optical component process and technology, a size of an MZ modulator and a size of a component change. All structures shown in this application are applicable.

FIG. 10 is a schematic diagram of a structure of an optical transmitting apparatus according to an embodiment of this application. As shown in FIG. 10, the optical transmitting apparatus 900 includes a laser 901, an MZ modulator 902, a signal source 903, and a bias voltage source 904. Specifically, the MZ modulator may be the MZ modulator provided in any one of the foregoing embodiments, or transformation of the MZ modulator provided in these embodiments. The laser 901 is configured to provide an optical carrier for the MZ modulator 902. The signal source 903 is configured to provide a differential signal for the MZ modulator 902. The bias voltage source 904 is configured to provide a bias voltage for the MZ modulator 902.

The signal source 903 is optional. For example, the signal source may be outside the optical transmitting apparatus, and another component outside the optical transmitting apparatus provides the differential electrical signal.

The bias voltage source 904 is optional. For example, when an optical transmission waveguide is of a LiNbO3 material, no bias voltage needs to be provided. Alternatively, for another example, the bias voltage source may be provided by an external component of the optical transmitting apparatus.

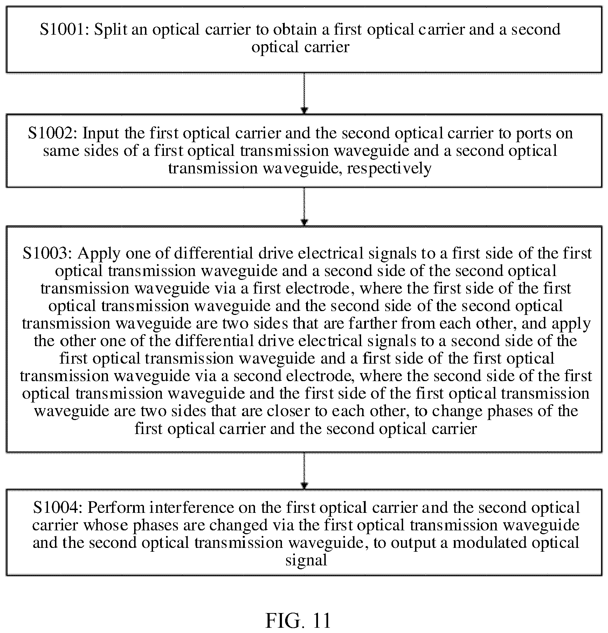

FIG. 11 is a schematic flowchart of an electro-optic modulation method according to an embodiment of this application. Electro-optic modulation is a process of loading an electrical signal onto an optical carrier. As shown in FIG. 11, the method includes a plurality of following steps.

S1001: Split an optical carrier to obtain a first optical carrier and a second optical carrier.

Specifically, the foregoing step may be completed by using an MMI coupler or a directional coupler.

S 1002: Input the first optical carrier and the second optical carrier to ports on same sides of a first optical transmission waveguide and a second optical transmission waveguide, respectively.

S1003: Apply one of differential drive electrical signals to a first side of the first optical transmission waveguide and a second side of the second optical transmission waveguide via a first electrode, where the first side of the first optical transmission waveguide and the second side of the second optical transmission waveguide are two sides that are farther from each other, and apply the other one of the differential drive electrical signals to a second side of the first optical transmission waveguide and a first side of the first optical transmission waveguide via a second electrode, where the second side of the first optical transmission waveguide and the first side of the first optical transmission waveguide are two sides that are closer to each other, to change phases of the first optical carrier and the second optical carrier.

Specifically, the differential drive electrical signals are respectively applied to the two optical transmission waveguides that are used as a medium for transmission of the two optical carriers, to change physical characteristics (for example, refractive indexes) of the two optical transmission waveguides, so that the phases of the two optical carriers output from the two optical transmission waveguides are different to some extent.

S1004: Perform interference on the first optical carrier and the second optical carrier whose phases are changed via the first optical transmission waveguide and the second optical transmission waveguide, to output a modulated optical signal.

Two optical carriers having a specific phase difference are coupled to output an optical signal. The optical signal carries data information in a drive electrical signal, to achieve an objective of loading the electrical signal to the optical carrier (that is, achieve an objective of electro-optic modulation).

It should be understood that the foregoing method steps may be completed by using any one of the MZ modulator structures mentioned in the foregoing embodiments or transformation thereof.

According to the foregoing modulation method, a process of converting an electrical signal into an optical signal can be completed simply and efficiently. While lengths of the optical transmission waveguide and the electrode remain unchanged, the foregoing method may use a smaller drive voltage than a method in the conventional technology, thereby reducing power consumption caused by modulation.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A Mach-Zehnder MZ modulator, wherein the MZ modulator comprises a splitter, two modulation arms, and a coupler, wherein
the two modulation arms comprise two optical transmission waveguides and two electrodes;
the splitter comprises one first input port and two first output ports, the first input port is configured to receive an optical carrier, and the splitter is configured to: perform power splitting on the optical carrier to obtain a first optical carrier and a second optical carrier, and input the first optical carrier and the second optical carrier to input ports of the two optical transmission waveguides respectively via the two first output ports;
the two electrodes comprise a first electrode and a second electrode, the first electrode and the second electrode are configured to: receive a first input electrical signal and a second input electrical signal, respectively, and apply the first input electrical signal and the second input electrical signal to the two optical transmission waveguides to change phases of the first optical carrier and the second optical carrier, wherein the first input electrical signal and the second input electrical signal are differential signals;
the two optical transmission waveguides comprise a first optical transmission waveguide and a second optical transmission waveguide, both a first side of the first optical transmission waveguide and a second side of the second optical transmission waveguide are connected to the first electrode, the first side of the first optical transmission waveguide and the second side of the second optical transmission waveguide are different sides, both a second side of the first optical transmission waveguide and a first side of the second optical transmission waveguide are connected to the second electrode, and the second side of the first optical transmission waveguide and the first side of the second optical transmission waveguide are different sides; and
the coupler comprises two second input ports and one second output port, the two second input ports are configured to be connected to output ports of the two optical transmission waveguides, respectively, and the coupler is configured to: perform interference on the optical carriers whose phases are changed via the two modulation arms, and output the optical carriers from the second output port.

2. The MZ modulator according to claim 1, wherein the first optical transmission waveguide has a first PN junction, the second optical transmission waveguide has a second PN junction, the first PN junction and the second PN junction are respectively configured to change, based on the first input electrical signal and the second electrical signal, the phases of the first optical carrier and the second optical carrier that pass through the two optical transmission waveguides, and the first PN junction and the second PN junction have a same polarity distribution direction; and
that both a first side of the first optical transmission waveguide and a second side of the second optical transmission waveguide are connected to the first electrode, and both a second side of the first optical transmission waveguide and a first side of the second optical transmission waveguide are connected to the second electrode comprises: the first electrode is connected to a P end of the first PN junction and an N end of the second PN junction, and the second electrode is connected to an N end of the first PN junction and a P end of the second PN junction; or the first electrode is connected to an N end of the first PN junction and a P end of the second PN junction, and the second electrode is connected to a P end of the first PN junction and an N end of the second PN junction.

3. The MZ modulator according to claim 1 or 2, wherein the first electrode comprises a T-shaped extension part and/or an L-shaped extension part, and the T-shaped extension part and/or the L-shaped extension part of the first electrode are/is configured to be connected to the second side of the second optical transmission waveguide; and the second electrode comprises a T-shaped extension part and/or an L-shaped extension part, and the T-shaped extension part and/or the L-shaped extension part of the second electrode are/is configured to be connected to the second side of the first optical transmission waveguide and the first side of the second optical transmission waveguide.

4. The MZ modulator according to any one of claims 1 to 3, wherein the MZ modulator further comprises other two electrodes, disposed on two sides of the two electrodes, respectively, and the other two electrodes are configured to be grounded or connected to a direct current voltage.

5. The MZ modulator according to any one of claims 2 to 4, wherein the N end of the first PN junction is adjacent to the P end of the second PN junction to form a third PN junction;
that the second electrode is connected to an N end of the first PN junction and a P end of the second PN junction comprises: the second electrode is connected to the N end of the first PN junction via the third PN junction, and the second electrode is connected to the P end of the second PN junction; and
that the second electrode is connected to a P end of the first PN junction and an N end of the second PN junction comprises: the second electrode is connected to the P end of the first PN junction via the third PN junction, and the second electrode is connected to the N end of the second PN junction.

6. The MZ modulator according to claims 2 to 5, wherein a first negative bias voltage is applied to the first PN junction, a second negative bias voltage is applied to the second PN junction, and a difference between a voltage absolute value of the first negative bias voltage and a voltage absolute value of the second negative bias voltage is less than a preset threshold.

7. The MZ modulator according to any one of claims 1 to 6, wherein parts that are of the two optical transmission waveguides and that are used for transmission of the first optical carrier and the second optical carrier are of an S shape.

8. The MZ modulator according to any one of claims 1 to 7, wherein the first optical transmission waveguide and the second optical transmission waveguide each comprise a plurality of transmission waveguides, and the plurality of transmission waveguides are connected in series by a curved waveguide.

9. A multi-channel MZ modulator, wherein the multi-channel MZ modulator comprises a plurality of MZ modulators according to any one of claims 1 to 8, an isolation electrode is disposed between two adjacent MZ modulators among the plurality of MZ modulators, and the isolation electrode is configured to be grounded or connected to a direct current voltage.

10. An optical transmitting apparatus, comprising a laser and the MZ modulator according to any one of claims 1 to 8, and the laser is configured to transmit an optical carrier to the MZ modulator.

11. The optical transmitting apparatus according to claim 10, wherein the optical transmitting apparatus further comprises a signal source and a bias voltage source, the signal source is configured to provide a first input electrical signal and a second input electrical signal for the MZ modulator, and the bias voltage source is configured to provide a bias voltage for the MZ modulator.
